# EUROPEAN PATENT APPLICATION

(11) **EP 0 641 708 A1**
(43) Date of publication of application: **08.03.1995**
(21) Application number: 94202494.4
(22) Date of filing: 31.08.1994
(51) Int. Cl.: B62D 33/063, B62D 33/08

(54) **Vehicle**

(30) Priority: 06.09.1993 NL 9301534
(71) Applicant: MACHINEFABRIEK GEBR. DOUVEN B.V., NL-5960 AA Horst (NL)
(72) Inventor: Douven, Theodorus Antonius, NL-5962 NX Horst (NL)
(74) Representative: de Bruijn, Leendert C.

(57) **Abstract**

Vehicle (1) having a movable cab (3) disposed thereon. The connection between cab and vehicle is achieved by a rod structure (11,12). Said rod structure at one side is hingedly fixed to the top side (10) of the chassis and at the other side is hingedly fixed at the position of the rear side (13) of the cab. Through this latter fixing, it is possible with a suitable design of the rod system to move the cab between a position within the confines of the chassis and a position lying outside the front side of the chassis.

## Description

The present invention relates to a vehicle comprising a cab, which is disposed movably thereon at the front side by means of a rod structure, at one side connected to the top side of the chassis of the vehicle at a distance from the front side thereof, and at the other side connected to the cab.

Such a vehicle is known from US Patent Specification 3,721,077. In this case the rod structure consists of a parallelogram structure, so that it is ensured that the cab always remains horizontal during movement out of the position on the chassis and out of the position outside the chassis. In the case of the device according to this US Patent Specification the connection of the rod system to the chassis is formed by a column projecting relatively high above the chassis. The connection of the rod system to the cab is made at the underside of the cab, which means that the cab is moved upwards and forwards out of the position on the chassis through movement of the rod system.

Such a structure makes it considerably more difficult to get into the cab. Moreover, in this way it is not easily possible to use the cab as a "balancing weight". For, through movement of the rod system, the weight of the cab is moved outwards, but at the same time a movement upwards occurs, so that the centre of gravity also shifts upwards, with the result that the risk of the device tilting increases.

Such movable cabs are used in all kinds of agricultural vehicles such as spraying vehicles. In this case the cab is placed on the chassis in one position, in which position the vehicle can be driven along the road. The actual working on the crop can be carried out in a second, displaced position of the cab. In this second, displaced position, the driver has a better overall view of the crop ahead of him. Although the invention is described here with reference to the movement of the cab in the forward direction, it must be understood that if the vehicle is moving in another direction, the direction of movement of the cab also changes with it, and that such modifications lie within the scope of the present invention.

It is the object of the present invention to modify the structure known from US Patent Specification 3,721,077 in such a way that it is easier for the operating person to get into the cab, in the working position the cab is closer to the ground, and better balancing of the vehicle is provided.

This object is achieved in the case of a vehicle of the type described above through the fact that the rod structure is hingedly fixed at the rear side of the cab, which rod structure is movable between an essentially vertical position, in which the cab lies within the confines of the chassis, and an essentially horizontal position, in which the cab lies beyond the front side of the chassis. Hingedly fixing the rod structure at the rear side makes it possible for the cab to move downwards along the end face of the chassis until it is past the front side of the vehicle. This means that in the working position it is easier to get into the cab. Moreover, not only is the centre of gravity of the cab away from the chassis, as a result of which pressure is shifted from the rear wheel to the front wheel, but said centre of gravity is also relatively low, with the result that the risk of overturning is removed. Through the structure proposed here, it is possible to fit auxiliary means for the vehicle, such as pumps and/or motors and the like, between the hinge point of the rod structure on the chassis and the end thereof. For, through suitable dimensioning of the rod structure, the cab in the vertical position is situated above said auxiliary means, and in the lowered position in front of said auxiliary means. This contrasts with the structure according to US Patent Specification 3,721,077, in which the cab must be situated in the position above the chassis, very close to the chassis, because it is only in that position that it is possible to get into the cab.

According to an advantageous embodiment of the invention, the rod structure comprises a parallelogram structure. This makes it possible in a particularly simple way to keep the cab horizontal at all times.

Through fixing said parallelogram or the rod structure at the rear top side of the cab, the underside of the cab can be moved over a considerable distance below the top side of the chassis into the position of the cab outside the chassis.

According to another advantageous embodiment, the rod structure is fixed to a scoop-shaped part, which scoop-shaped part is provided with accommodation means for the cab. In this way the cab is easy to replace.

The invention will explained in greater detail below with reference to an exemplary embodiment shown in the drawing, in which:
Fig. 1 shows a spraying vehicle according to the invention, in side view;
Fig. 2 shows a detail of the spraying vehicle according to Fig. 1, with the cab according to the invention shown in different positions; and
Fig. 3 shows a top view of the device according to Fig. 2.

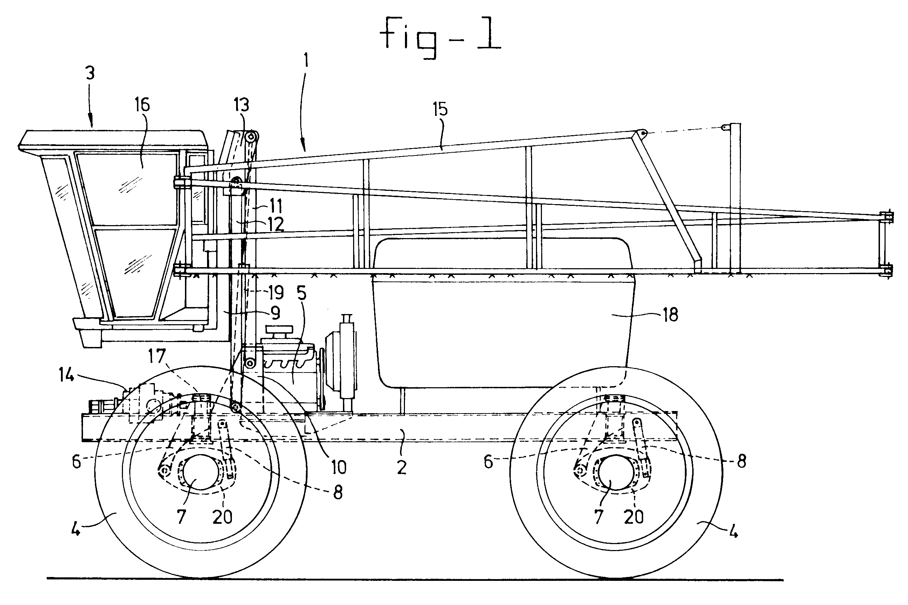

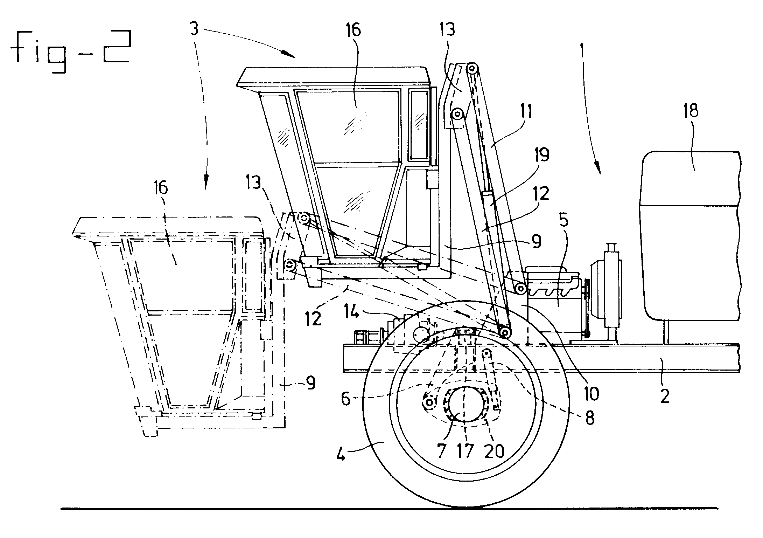

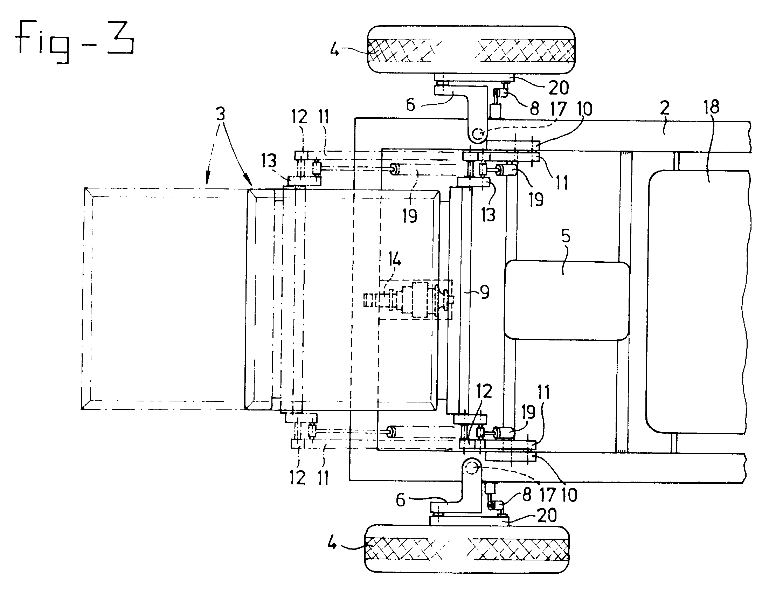

In the figures a vehicle is indicated by 1. In this example a spraying vehicle has been selected, provided with a collapsible spraying boom 15. Since the spraying boom and spray tank 18 do not form part of the invention, they will not be discussed any further. It is clear that these booms lead to instability and an unfavourable weight distribution over the axles. Vehicle 1 is provided with a chassis 2, on which a cab 3 is disposed in a movable manner. Cab 3 is connected to the chassis by means of a parallelogram structure, consisting of a top support arm 11 and a bottom support arm 12, which arms engage at one side on a support plate 10 fixed to the chassis and at the other side on a fixing plate 13 which forms part of a scoop 9. Cab 3 is disposed at the underside of L-shaped scoop 9. Access to the cab is by way of door 16. The hinge points of top support arm 11 and bottom support arm 12 at the fixing point 13 lie at the position of the top rear side of the cab. This makes it possible to move cab 3 out of the position shown by solid lines in Figs. 1 and 2 into the position shown by dotted lines in Fig. 2. In other words, the cab is situated a short distance from the ground. The movement of the cab is controlled by a hydraulic piston-cylinder unit 19 which is connected at one side to the support plate 10 and at the other side to fixing plate 13 in the hinge point with top support arm 11. Between the two parallelogram structures which are provided to the left and right, as can be seen from the top view of Fig. 3, a drive motor 5 is placed at the rear side, while an auxiliary motor 14 is provided at the front side of the chassis. The support arms 11 and 12 can move along said motors. As can be seen from Figs. 2 and 3, the drive motor 5 and the auxiliary motor 14 are easily accessible, and the presence of the cab 3 does not constitute any obstacle. The vehicle 1 is supported on wheels 4 which are fixed by means of a wheel axle 7 to a plate 20, which at one side is connected to a cylinder 8 and at the other side is hingedly connected to stub-axle arm 6. By way of hinge 17, stub-axle arm 6 can rotate in order to control the vehicle, while the height of the wheel relative to the vehicle can be regulated by means of cylinder 8.

It has been found that with the structure according to the invention the cab can be moved without any problem into the position shown by dotted lines in Fig. 2. The centre of gravity of the vehicle is consequently moved outwards, which increases the wheel pressure on the front wheel and reduces it on the rear wheel, on which the relatively heavy tank and spraying boom are resting. The centre of gravity is also lowered, which contributes further to the stability of the vehicle. In the position shown by dotted lines, the vehicle can be moved during the carrying out of the operation for which the vehicle is suitable. However, it is also possible to do this with the cab placed in the position shown by solid lines.

It must be understood that the invention is illustrated above with reference to a preferred embodiment, and that numerous modifications can be made thereto without going beyond the scope of the present application, as explained in the appended claims. For example, it is possible to make the vehicle something other than a spraying vehicle. It is also possible to fix the parallelogram structure at a point lower than that shown in the drawing, but still to provide it at the rear side of the cab.

## Claims

1. Vehicle (1) comprising a cab (3), which is disposed movably thereon at the front side by means of a rod structure which at one side is connected to the top side of the chassis (2) of the vehicle at a distance from the front side thereof, and at the other side is hingedly connected to the rear side of the cab, which rod structure is movable between an essentially vertical position, in which the cab lies within the confines of the chassis, and an essentially horizontal position, in which the cab lies beyond the front side of the chassis, characterized in that the connection between the vehicle and the cab comprises only said rod system, in that the vertical position comprises the travelling position and the horizontal working position, and in that the rod system is fixed to the rear top side of the cab.

2. Vehicle according to Claim 1, in which the rod structure comprises a parallelogram structure.

3. Vehicle according to one of the preceding claims, in which the rod structure is fixed to a scoop-shaped part (9), which scoop-shaped part is provided with accommodation means for the cab.

4. Vehicle according to one of the preceding claims, in which auxiliary means (14) for the vehicle are disposed between the fixing of the rod structure and the front side of the chassis.
